# EUROPEAN PATENT APPLICATION

(11) **EP 1 128 702 A2**
(43) Date of publication of application: **29.08.2001**
(21) Application number: 01400371.9
(22) Date of filing: 13.02.2001
(51) Int. Cl.: H04Q 11/00

(54) **Traffic protection mechanism for a fiber optic network having a linear topology**

(30) Priority: 18.02.2000 IT MI000275
(71) Applicant: ALCATEL, 75008 Paris (FR)
(72) Inventor: de Girolamo, Claudio, 20094 Corsico (Milano) (IT); Sestito, Vincenzo, 20127 Milano (IT)
(74) Representative: Colombo, Stefano Paolo

(57) **Abstract**

A method is described for protecting the traffic in a fiber optic telecommunications network, said network being of linear type and comprising at least two nodes (1,2,3,...,n) connected by one or more spans comprising in turn working fiber (WF) and protection fiber (SF). The method being characterized by adopting a distributed protection mechanism of the MS-SPRING type for closed-ring networks. In order to obtain all the functionalities of the protocols for linear networks, all at the nodes are instructed to disregard any command or ring failure through a Lockout of Working Channels-Ring command.

## Description

The present invention relates to a traffic protection mechanism for a fiber-optic telecommunication network having a linear topology, such a network being fit for synchronous transmissions such as SDH or SONET.

In current telecommunication networks it has become extremely important to have the possibility of clearing the failures occurring in the networks themselves without impairing the functionality of the service. Therefore, the telecommunication networks, and in particular the fiber-optic networks, are provided with protection means against failures of network elements.

In the SDH MS-SP (Multiplex Section-Shared protection) ring networks, for instance, a distributed protection mechanism is implemented, which mechanism allows the automatic traffic restoration in case of defects in the connection fibers. In other words, the MS-SP ring networks perform the automatic traffic restoration through a synchronized rerouting of said traffic, which is carried out at each node of the ring. This operation is controlled by a protocol consisting in messages that are continuously exchanged between adjacent nodes. Said protocol and the operations involved thereby are defined by many International Standards, issued by ANSI, by IUT-T and by ETSI, and they are characterized by a certain set of rules and messages. See, for instance, "Recommendation ITU-T G.841".

The protection in an MS-SPRING is implemented according to a "Bridge and Switch" technique that substantially consists in re-routing the traffic, through a proper modification of the internal connections of the network elements, switching it from the working capacity to the protection capacity.

The bridge operation substantially causes a node to transmit the same traffic both over the working capacity and over the protection capacity, whereas the switch operation corresponds to a selection of the traffic traveling over the protection capacity instead of the traffic traveling over the working capacity.

Such a protection technique, which is called APS (Automatic Protection Switch), requires that each network element be provided, inside thereof, with a device, termed APS controller, which is able to detect the line failures, to pass on and receive the information concerning the other network elements by means of said protocol, and to perform the Bridge&Switch actions.

In four-fiber rings, the fault clearing occurs in accordance with two different ways: in case of failure in the sole working capacity at a given span, the traffic is re-routed over the corresponding protection capacity of the same span (span re-routing), whereas in case of failure of both the working capacity and the protection capacity of a span, the traffic is re-routed over the ring in such a way as to travel the other route joining the two termination nodes so as to avoid the crossing of the broken span (ring re-routing). Obviously, in two-fiber rings, being the working and the protection capacities both allocated on the same bi-directional fiber pair, only the ring re-routing is applicable.

The Standards define two different types of MS-SPRING protection mechanisms: the "classic" or terrestrial algorithm and the transoceanic one; the two algorithms allow the achievement of the same results in terms of traffic protection, still using different re-routing methods.

However, as it is known, the telecommunication networks which are currently used are not always configured as a closed ring (ring networks) but they could also be configured as "linear" spans (linear networks), namely chains of nodes, with each node being connected with two adjacent nodes on two sides, with the exception of the termination nodes of the network, that are connected to one node only.

Also in the linear networks, each pair of adjacent network elements is connected through a working span and a protection one over which the traffic normally carried on the working span, possibly become affected by a failure, is re-routed. Such a mechanism is in all coincident with the span re-routing considered for the ring systems, whereas the ring rerouting is obviously unavailable, as the linear network topology is not closed. Also this protection mechanism for linear networks is defined in the ITU-T Recommendation G.841 under the name MSP (Multiplex Section Protection) and controlled by a protocol (hereinafter referred to as MSP protocol) similar to the MS-SP ring protocol as to principles and purposes, but characterized by different rules and messages.

In view of the above state of the art, the main object of the present invention is to provide a protection mechanism for telecommunication networks that is indifferently usable in linear networks and in ring networks. This and further objects are achieved by a method having the characteristics set forth in claim 1 and a network element having the characteristics set forth in claim 5. Further characteristic features of the invention are set forth in the respective dependent claims. All the claims are however intended to form an integral part of the present description.

The advantages achieved by the present invention will be clear as for now to a person skilled in the art. Firstly, the use of an identical protocol for linear networks and ring networks is a practical and therefore economical advantage to the equipment manufacturers and to the computer programmers who implement the corresponding computer software programs. Secondly, the present invention offers solid advantages to the network managers that have to become familiar with the language of only one protocol and, more generally, the logic and the working procedures of only one traffic protection system. Finally, a further advantage both to the manufacturer and the manager resides in that the latter, when he decides to install a network, is not forced to choose between the two topologies. In other words, at first choose, one can install a linear network, having the possibility of installing later one or more spans so as to close the ring network without changing the protection protocol under already operating network condition and therefore with payload that could be damaged.

The method according to the present invention is a method for protecting traffic in a fiber-optic telecommunications network comprising the steps of: providing at least two nodes or network elements; and providing at least one corresponding fiber optic span connecting said network elements in a linear or open-ring configuration, said at least one fiber optic span comprising working fiber (WF) and protection fiber (SF) The method is characterized by the step of providing the network with an MS-SPRING shared protection mechanism for closed ring networks.

Advantageously, the method further comprises the step of instructing said at least two nodes of the network so that they disregard any ring command or failure possibly coming from any node of the same network or issued by a management system.

The invention further includes a network element for a network comprising: at least two nodes or network elements; and at least one corresponding fiber optic span connecting said network elements in a linear or open-ring configuration, said at least one fiber optic span comprising working fiber and protection fiber. The network element is characterized in that it is managed by an MS-SPRING shared protection mechanism for closed ring networks.

The network element according to the present invention is further characterized in that it is instructed to disregard any ring command or failure possiblycoming from other network elements of the same network.

Furthermore, the invention includes the use of an MS-SPRING protocol for a fiber-optic closed ring network, characterized in that it is used for a network comprising at least two nodes or network elements; and at least one corresponding fiber optic span connecting said network elements in a linear or open-ring configuration.

The characteristics of the invention will anyway result in being clear from the following detailed description given by a mere non limiting example, to be red with reference to the attached drawing sheets, wherein:
- Fig. 1a shows an open-ring telecommunication network protected against failures by a conventional MS-SPRING protocol;
- Fig. 1b shows the network of Fig. 1 should a failure in the working fiber between nodes 3 and 4 occur;
- Fig. 1c shows the network of Fig. 1 should a signal degrade between nodes 3 and 4 occur;
- Fig. 1d shows the network of Fig. 1 protected against failures by a protocol in accordance with the present invention; and
- Fig. 2 shows the priority rank of the various failures, conditions and commands provided by the conventional MS-SPRING protocol.

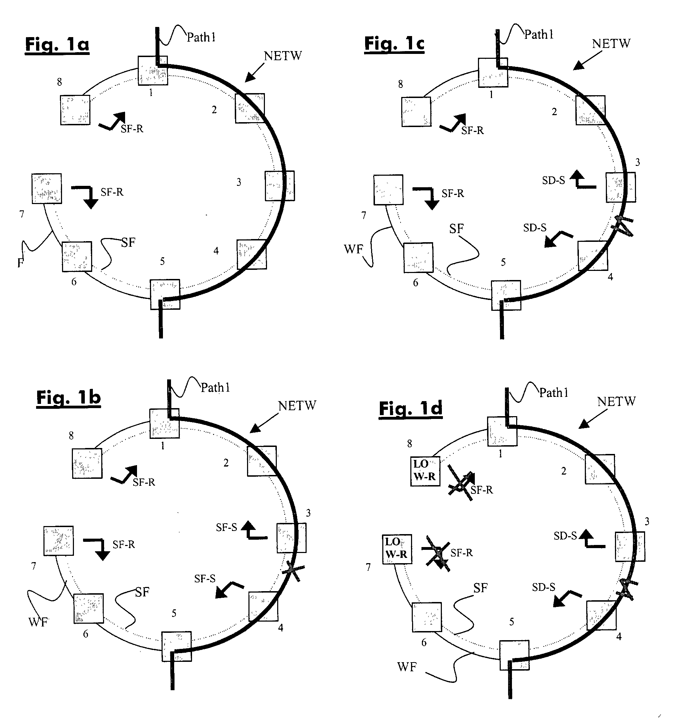

The basic idea of the present invention is that a ring network having one of its spans broken both at the working capacity and the protection capacity, namely an open-ring network, is to all intents and purposes similar to a linear network whose termination nodes are just those at the ends of the open span. Reference is made to Fig. 1a and to the open-ring network, denoted by NETW, having one of its spans, for instance the one between node 7 and node 8, affected by a failure both at the working capacity WF (outer thin line) and at the protection capacity SF (inner dashed thin line): this is to all intents and purposes similar to a linear network whose end nodes are just the nodes 7 and 8.

A ring network which is protected by a MS-SPRING mechanism in which a permanent break is produced at one of its spans is actually deprived of the capability of performing ring re-routing but it keeps, at each of the remaining spans, the capability of performing span re-routing between every node pair, thus becoming functionally similar, but non-coincident, to a non closed (hence linear) network protected by the MSP mechanism.

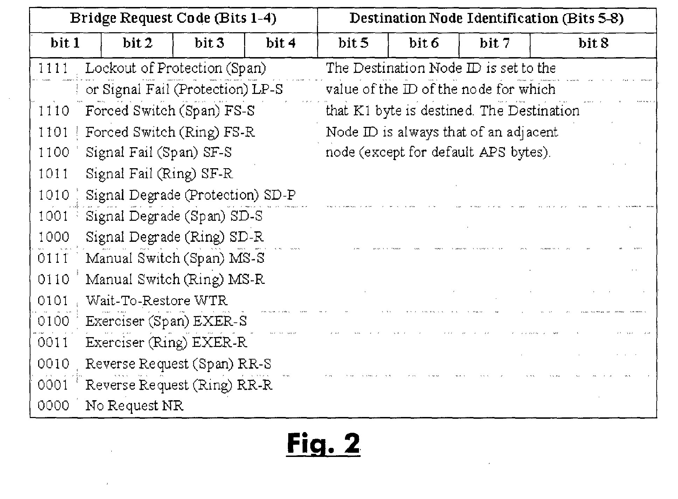

It is similar, but non-coincident, because, while the MS-SPRING protocol provides a ring network restoring all the failures that the MSP protocol can restore in a linear network, the MS-SPRING protocol instead applied to an open-ring network provides the restore of all the failures that the MSP protocol provides for a linear network with the exception of "Signal Degrade" failure, "Manual Switch" command, and "Wait-To-Restore" condition. This occurs because when a ring is open due to the fact that one of its spans is affected by a ring failure, the MS-SPRING protocol contemplates that such a condition, having a rank which is higher than the above mentioned conditions (see priority rank table of Fig. 2), be signaled by the two nodes adjacent to the failure, and such a high priority signaling results in that the above-mentioned conditions, having lower priority, are disregarded.

In other words, still referring to Fig. 1a, should the MS-SPRING protection protocol be applied to the open ring NETW, the nodes 7 and 8 would send a SF-R signal, namely a ring failure signal. Such a failure conventionally takes priority over other failures or signaling (see priority rank table of Fig. 2). Thus, in the event that the working capacity between nodes 3 and 4 were not completely broken but it was just damaged/compromised ("degraded"), the nodes 3 and 4 would not be able to notify the Signal Degrade-Span (SD-S) because they have lower priority compared with SF-R signaling. The consequence would be that the high-priority traffic of path 1 would go on travelling over the degraded working capacity between nodes 3 and 4 and would instead not be switched on the protection fiber joining these nodes.

The table of Fig. 2, corresponding to table 7-7 of ITU-T Recommendation G.841, illustrates the K1 byte functions in a telecommunications frame and lists the various possible failures, commands and conditions.

Therefore, should one want to implement (both in hardware or software or hardware & software) the MS-SPRING protocol to provide a protected linear network, the linear network should be considered a special case of a ring system lacking the closing span between the two end elements of the network, and the cited limitations should be overcome in some way. The problem to be solved is, therefore, how to succeed in using the same MS-SPRING protocol both for linear and ring networks, thus obtaining the same performances under the point of view of restoring against external events.

The invention, therefore, contemplates the application of an MS-SPRING algorithm to provide protection capability to linear networks, by adapting it in the following manner: instructing all the nodes of the ring so that they completely ignore/disregard any ring failure or command. This effect can be obtained in several manners, for instance through implementation of a suitably made MS-SPRING mechanism, which is capable of operating both with a conventional "ring" configuration and an "open-ring" configuration.

However, should a conventional MS-SPRING mechanism be already available, it can be adapted to a linear network by exploiting the existence of conventional operator commands, already provided for the conventional network maintenance operations; in particular during the stage of configuring and planning a network and designing the related MS-SPRING protection mechanism. The management system must issue the "Lockout of Working Channels - Ring" command defined by the related standards, at both sides of each node of the network. Such a command, by its very nature, obliges the node receiving it to ignore/disregard the local ring failure, namely the failure both of the working and protection capacities between the two nodes: in this way, a linear network will be a special case of a closed-ring network.

In the case of a MS-SPRING-managed linear network, the termination nodes, which normally would signal the failure, because of the mentioned command, would signal nothing, thus allowing possible Signal Degrade, Manual Switch, or Wait to Restore events to be regularly served.

In order to make the above set forth concepts clear, the same will be summarized hereinafter with reference to Fig. 1. Consider Fig. 1a: the linear network has nodes 8 and 7 as its ends and therefore, when it is intended as ring network, it has a "congenital" and permanent opening between nodes 8 and 7. Such a permanent opening, according to the MS-SPRING mechanism, corresponds to a ring failure. Because of this failure, the nodes 8 and 7 start the protection protocol permanently by signaling the code SF-R corresponding to that failure. Should a real span failure, e.g. a fiber cut between nodes 3 and 4 (Fig. 1b), occur during the network operation life, the nodes 3 and 4 would signal the related SF-S code. Since the MS-SPRING mechanism contemplates that SF-S takes priority over SF-R (the priority scale is represented in Fig. 2), the real failure would be regularly served and therefore the traffic that would be affected thereby would be suitably restored.

Should, instead of a break, a degrade of the same working fiber between nodes 3 and 4 occur (Fig. 1c), since the MS-SPRING mechanism contemplates that SF-R takes priority over SD-S, the degrade condition would not be signaled by nodes 3 and 4 and hence the traffic would remain degraded.

By applying the Lockout of Working Channels command to nodes 7 and 8, such nodes would be inhibited from transmitting the SF-R signaling (Fig. 1d), hence the possible SD-S condition would be regularly served and the traffic which is affected thereby would be properly restored. The same applies to Manual Switch Span and Wait-To-Restore conditions.

The above-mentioned protection functionalities are applicable to, and are obtained by, an MS-SPRING protocol both for classic and transoceanic rings.

In addition to the above-mentioned advantages which are obtained by means of the present invention there is the additional advantage of allowing, after the installation of the linear network (or open-ring network), the completion of the network by closing the ring with one or more spans without having to adopt (and hence to install) a new protocol. In that case, the only modification to be made consists in instructing all the nodes of the ring so that they cease to disregard the "ring" failures or commands. All this results in a remarkable cost and energy saving and above all it prevents the traffic in the network from being discontinued.

For the sake of clarity, although at this point it should be clear from the above description, the wording "open-ring network" is deemed to be equivalent to a "linear network". Moreover, although in the present description reference is only made to SDH synchronous transmission for convenience, the same concepts are deemed applicable also to other types of synchronous transmission, such as e.g. SONET. The scope of the present invention is therefore deemed as extended to such type of transmission.

Finally, the nodes of the network could be any in number (n) and arranged in just any way, not necessarily as indicated in the various figures.

There have thus been shown and described a novel method and a novel node which fulfill all the objects and advantages sought therefor. Many changes, modifications, variations and other uses and applications of the subject invention will, however, become apparent to those skilled in the art after considering the specification and the accompanying drawings which disclose preferred embodiments thereof. All such changes, modifications, variations and other uses and applications which do not depart from the spirit and scope of the invention are deemed to be covered by the invention which is limited only by the claims which follow.

## Claims

1. Method for protecting traffic in a fiber-optic telecommunications network (NETW), said method comprising the steps of:
- providing at least two nodes or network elements (1, 2, 3,...,n);
- providing at least one corresponding fiber optic span connecting said network elements (1, 2, 3,...,n) in a linear or open-ring configuration, said at least one fiber optic span comprising working fiber (WF) and protection fiber (SF), characterized by the step of
- providing the network with an MS-SPRING shared protection mechanism for closed ring networks.

2. Method according to claim 1, characterized by comprising the further step of instructing said at least two nodes (1, 2, 3,..., n) of the network (NETW) so that they disregard any ring command or failure (SF-R, SD-R, FS-R, MS-R, EXER-R) coming from any node of the same network or issued by a management system.

3. Method according to claim 2, **characterized in that** the step of instructing said at least two nodes (1, 2, 3,..., n) of the network (NETW) so that they disregard any ring command or failure (SF-R, SD-R, FS-R, MS-R, EXER-R) comprises the step of imparting a Lockout of Working Channels-Ring command to said at least two nodes (1, 2, 3,..., n) of the network (NETW).

4. Method according to claim 2 or 3, wherein the nodes (1, 2, 3,..., n) of said network (NETW) having a linear configuration comprise a first and a second end nodes (7, 8), the method being characterized by comprising the further steps of:
- connecting said end nodes (7, 8) by means of one or more fiber optic spans so as to obtain a closed-ring network; and
- removing the instruction to disregard any ring command or failure from all the nodes (1, 2, 3,..., n) of the former open-ring network.

5. Network element (1, 2, 3,..., n) for a fiber-optic telecommunications network (NETW), said network comprising:
- at least two nodes or network elements (1, 2, 3,...,n);
- at least one corresponding fiber optic span connecting said network elements (1, 2, 3,...,n) in a linear or open-ring configuration, said at least one fiber optic span comprising working fiber (WF) and protection fiber (SF), the network element being **characterized in that** it is managed by an MS-SPRING shared protection mechanism for closed ring networks.

6. Network element according to claim 5, **characterized in that** it is instructed to disregard any Ring command or failure (SF-R, SD-R, FS-R, MS-R, EXER-R) coming from other network elements of the same network.

7. Network element according to claim 6, **characterized in that** the instruction to disregard any ring command or failure is removed should said linear network be closed with one or more spans to close it in a ring configuration.

8. Fiber-optic telecommunications network (NETW), said network comprising:
- at least two nodes or network elements (1, 2, 3,...,n);
- at least one corresponding fiber optic span connecting said network elements (1, 2, 3,...,n) in a linear or open-ring configuration, said at least one fiber optic span comprising working fiber (WF) and protection fiber (SF),
characterized by comprising
- an MS-SPRING shared protection mechanism for closed ring networks.

9. Network (NETW) according to claim 8, **characterized in that** the network elements (1, 2, 3,..., n) thereof comprise instructions so that they disregard any ring command or failure coming from other network elements of the same network..

10. Use of an MS-SPRING protocol for a fiber-optic closed ring network, **characterized in that** it is used for a network comprising:
- at least two nodes or network elements (1, 2, 3,...,n); and
- at least one corresponding fiber optic span connecting said network elements (1, 2, 3,...,n) in a linear or open-ring configuration.

11. Computer program comprising computer program code means adapted to perform all the steps of claims 1 to 4 when said program is run on a computer.

12. Computer-readable medium having a program recorded thereon, said computer-readable medium comprising computer program code means adapted to perform all the steps of claims 1 to 4 when said program is run on a computer.
